# EUROPÄISCHE PATENTANMELDUNG

(11) **EP 1 209 637 A1**
(43) Veröffentlichungstag der Anmeldung: **29.05.2002**
(21) Anmeldenummer: 00124902.8
(22) Anmeldetag: 15.11.2000
(51) Int. Cl.: G07F 9/02

(54) **Warenverkaufs- oder Nutzungserlaubnisverkaufsautomat**

(71) Anmelder: LANTEC Aktiengesellschaft Kommunikationssysteme, 47506 Neukirchen-Vluyn (DE)
(72) Erfinder: Lechner, Walter, 82031 Grünwald (DE); Ossmann, Dirk, 47799 Krefeld (DE)
(74) Vertreter: DR. STARK & PARTNER

(57) **Zusammenfassung**

Die Erfindung betrifft einen Warenverkaufs- oder Nutzungserlaubnisverkaufsautomat, mit einer Bedieneinrichtung, einer Zahleinrichtung, insbesondere einem Warenspeicher, einer Freigabeeinrichtung für die Waren oder Mietbestätigungen und mit einer mit der Bedieneinrichtung, der Zahleinrichtung, der Freigabeeinrichtung und insbesondere mit dem Warenspeicher verbundenen Steuereinrichtung. Um einen Warenverkaufs- oder Nutzungserlaubnisverkaufsautomat anzugeben, mit dem eine flexible, auf die momentanen Umstände abgestimmte Kaufpreisgestaltung möglich ist, soll eine die Verkäufe und/oder die aktuelle Füllmenge statistisch analysierende und die Verkaufspreise bei Überschreitung von eingespeicherten Verkaufs-Maximalwerten anhebende und bei Unterschreitung von eingespeicherten Verkaufs-Minimalwerten absenkende Regeleinrichtung vorgesehen sein.

## Beschreibung

Die Erfindung betrifft einen Warenverkaufs- oder Nutzungserlaubnisverkaufsautomat, mit einer Bedieneinrichtung, einer Zahleinrichtung, insbesondere einem Warenspeicher, einer Freigabeeinrichtung für die Waren oder Mietbestätigungen und mit einer mit der Bedieneinrichtung, der Zahleinrichtung, der Freigabeeinrichtung und insbesondere mit dem Warenspeicher verbundenen Steuereinrichtung.

Aus der Praxis sind derartige Verkaufsautomaten bekannt, die entweder zum Warenverkauf einen insbesondere temperierten Warenspeicher, bestückt z. B. mit gekühlten Getränken, Snacks, Blumensträußen oder anderen Waren aufweisen oder für den Verkauf von Nutzungserlaubnissen, z. B. von Parkflächen, Toilettenhäuschen oder dergleichen verwendet werden.

Dabei wird anhand der Bedieneinrichtung der jeweilige Kaufwunsch eingegeben und an der Zahleinrichtung der zu zahlende Verkaufspreis entrichtet, wobei der Verkaufspreis für den gewünschten Kauf durch die Bedieneinrichtung angezeigt werden kann.

Die Preise sind hierbei fest eingegeben und werden nur in bestimmten Abständen an die wirtschaftliche Entwicklung angepasst, z. B. entsprechend der Inflationsrate erhöht.

Nachteilig hierbei ist, dass das die Kaufpreisgestaltung wesentlich beeinflussende Kaufverhalten neben der Kaufpreishöhe selbst von vielen anderen Faktoren abhängt, die je nach den momentanen Umständen eine vollständig andere Kaufpreiskalkulation erlauben würde.

Aufgabe der Erfindung ist es, die vorgenannten Nachteile zu vermeiden und einen Warenverkaufs- oder Nutzungserlaubnisverkaufsautomat anzugeben, mit dem eine flexible, auf die momentanen Umstände abgestimmte Kaufpreisgestaltung möglich ist.

Diese Aufgabe wird gelöst durch einen Warenverkaufs- oder Nutzungserlaubnisverkaufsautomat, mit einer Bedieneinrichtung, einer Zahleinrichtung, insbesondere einem Warenspeicher, einer Freigabeeinrichtung für die Waren oder Mietbestätigungen und mit einer mit der Bedieneinrichtung, der Zahleinrichtung, der Freigabeeinrichtung und insbesondere mit dem Warenspeicher verbundenen Steuereinrichtung, wobei eine die Verkäufe und/oder die aktuelle Füllmenge statistisch analysierende und die Verkaufspreise bei Überschreitung von eingespeicherten Verkaufs-Maximalwerten anhebende und bei Unterschreitung von eingespeicherten Verkaufs-Minimalwerten absenkende Regeleinrichtung vorgesehen ist. Hierdurch kann einem geänderten Käuferverhalten Rechnung getragen werden, so dass der Verkaufspreis nahezu ohne zeitliche Verzögerung auf die entsprechende Nachfrage abstimmbar ist.

Vorzugsweise kann eine die Verkaufspreise anhand eingespeicherter Werte bei Detektion dieser Werte durch zumindest eine Sensoreinrichtung anhand eingespeicherter Parameter verändernde Regeleinrichtung vorgesehen sein, so dass unabhängig vom tatsächlichen Kaufverhalten bei Detektion von Sensorwerten, bei denen ein bestimmtes Kaufverhalten zu erwarten ist, durch eine entsprechende Anpassung der Kaufpreise dem zu erwartenden Kaufverhalten Rechnung getragen wird.

Dabei kann wenigstens eine Sensoreinrichtung als ein Temperaturfühler ausgebildet sein, so dass z. B. bei Getränke- oder Eisverkaufsautomaten bei Detektion von hohen Temperaturen, z. B. größer als 25°C, eine Preiserhöhung bewirkt wird. Hierfür kann auch ein die Sonneneinstrahlung erfassender Helligkeitssensor vorgesehen sein.

Auch kann wenigstens eine Sensoreinrichtung als ein Feuchtigkeitssensor ausgebildet sein, so dass bei Getränke- oder Eisverkaufsautomaten bei Detektion von hohen Luftfeuchtigkeitswerten, die auf regnerische Witterung schließen lassen, die Verkaufspreise herabgesetzt werden. Sofern Temperaturfühler und/oder Helligkeitssensor mit einem Feuchtigkeitssensor kombiniert werden, kann sogar eine schwül-heiße Witterung erkennbar und eine Preiserhöhung bewirkbar sein.

Ferner kann wenigstens eine Sensoreinrichtung als Zeitsensor ausgebildet sein, so dass das Preisgefüge sowohl in Abhängigkeit von der Tageszeit, z. B. in der Mittagszeit oder zu Stoßverkehrszeiten, aber auch an bestimmten Wochentagen, z. B. am Wochenende oder zu festgelegten Zeitpunkten, z. B. an Feiertagen oder Veranstaltungszeitpunkten entsprechend anpassbar und veränderbar ist.

Erfindungsgemäß kann der Warenverkaufs- oder Nutzungserlaubnisverkaufsautomat eine mit der Regeleinrichtung verbundene sowie auf ein Kommunikationsnetz zugreifende und hierüber Daten des Warenverkaufs- oder Nutzungserlaubnisverkaufsautomaten an eine Auswertungszentrale übermittelnde Datensendeeinrichtung aufweisen, so dass eine zentrale Auswertung der Verkaufsdaten möglich ist, die zur Festlegung der Preisbeeinflussungsparameter dient und auch die genaue Planung von Auffüll- und Bestückungsvorgängen von den Warenverkaufsautomaten ermöglicht.

Weiterhin kann der Warenverkaufs- oder Nutzungserlaubnisverkaufsautomat eine mit der Regeleinrichtung verbundene und auf ein Kommunikationsnetz zugreifende und hierüber Daten von einer Auswertungszentrale erhaltende Datenempfangseinrichtung aufweisen, so dass eine gezielte Beeinflussung der Verkaufsautomaten, z. B. unter Berücksichtigung von kurzfristigen Besonderheiten wie Straßenfesten, Wetterumschwüngen oder dergleichen möglich ist.

Dabei kann das Kommunikationsnetz kabelgebunden, wie z. B. das Internet ausgebildet sein, so dass die als Modem oder dergleichen ausgebildete Datensende- und/oder Datenempfangseinrichtung leicht und kostengünstig Daten senden bzw. empfangen kann.

Auch kann das Kommunikationsnetz drahtlos, wie z. B. das Mobilfunknetz ausgebildet sein, so dass die als entsprechendes Funk- oder IR-Modul ausgebildete Datensende- und/oder Datenempfangseinrichtung auch in geografischen Bereichen ohne kabelgebundene Kommunikationsnetze Daten senden bzw. empfangen kann bzw. ein aufwendiges Anschließen an bestehende kabelgebundene Netze entfällt.

Die erfindungsgemäße Aufgabe wird weiterhin gelöst durch ein System, bestehend aus einer Auswertungszentrale und mit dieser über ein Kommunikationsnetz verbundenen Warenverkaufs- oder Nutzungserlaubnisverkaufsautomaten der vorbeschriebenen Art, wobei die Regeleinrichtung bidirektional kommunizierend ausgebildet und in der Auswertungszentrale vorgesehen ist. Hierdurch kann z. B. eine einheitliche Beeinflussung der Preisgestaltung bei allen Warenverkaufs- oder Nutzungserlaubnisverkaufsautomaten erfolgen, was insbesondere bei positionsunabhängigen Faktoren, wie z. B. Feiertage, Uhrzeit, Wetter oder dergleichen und häufig wechselnden oder sich ändernden Parametern zur Preisbeeinflussung von Vorteil ist.

Weiterhin kann die Regeleinrichtung mit einer Datenbank betreffend die geografischen Positionen der einzelnen Warenverkaufs- oder Nutzungserlaubnisverkaufsautomaten zur gestaffelten Berücksichtigung des Abstands der jeweils zu beeinflussenden Warenverkaufs- oder Nutzungserlaubnisverkaufsautomaten von dem die Daten für die Beeinflussung liefernden Warenverkaufs- oder Nutzungserlaubnisverkaufsautomat verbunden sein, so dass einerseits eine gestaffelte, in ihrem Ausmaß z. B. von geografischen Abstand zu einem Veranstaltungsort oder dergleichen abhängige Beeinflussung des Verkaufspreises erfolgen kann und andererseits auch generell verschiedene Preisstufen in Abhängigkeit von der Lage und sonstigen Parametern möglich sind.

Erfindungsgemäß kann zumindest ein Warenverkaufs- oder Nutzungserlaubnisverkaufsautomat eine von der Auswertungszentrale über das Kommunikationsnetz und die Datenempfangseinrichtung mit Zusatzdaten betreffend die anderen Warenverkaufs- oder Nutzungserlaubnisverkaufsautomaten versorgte Zusatzinformationsanzeige beinhalten, so dass z. B. bei erschöpftem Warenspeicher die Auswertungszentrale durch Empfang der Datensendungen der anderen Warenverkaufs- oder Nutzungserlaubnisverkaufsautomaten Informationen über einen noch über eine entsprechende Warenbestückung verfügenden anderen Automaten an den Automaten mit dem erschöpften Warenspeicher übermitteln kann, die dann durch die Zusatzinformationsanzeige ausgegeben werden.

## Patentansprüche

1. Warenverkaufs- oder Nutzungserlaubnisverkaufsautomat, mit einer Bedieneinrichtung, einer Zahleinrichtung, insbesondere einem Warenspeicher, einer Freigabeeinrichtung für die Waren oder Mietbestätigungen und mit einer mit der Bedieneinrichtung, der Zahleinrichtung, der Freigabeeinrichtung und insbesondere mit dem Warenspeicher verbundenen Steuereinrichtung, **dadurch gekennzeichnet, dass** eine die Verkäufe und/oder die aktuelle Füllmenge statistisch analysierende und die Verkaufspreise bei Überschreitung von eingespeicherten Verkaufs-Maximalwerten anhebende und bei Unterschreitung von eingespeicherten Verkaufs-Minimalwerten absenkende Regeleinrichtung vorgesehen ist.

2. Warenverkaufs- oder Nutzungserlaubnisverkaufsautomat, mit einer Bedieneinrichtung, einer Zahleinrichtung, insbesondere einem Warenspeicher, einer Freigabeeinrichtung für die Waren oder Mietbestätigungen und mit einer mit der Bedieneinrichtung, der Zahleinrichtung, der Freigabeeinrichtung und insbesondere mit dem Warenspeicher verbundenen Steuereinrichtung, insbesondere nach Anspruch 1, **dadurch gekennzeichnet, dass** eine die Verkaufspreise anhand eingespeicherter Werte bei Detektion dieser Werte durch zumindest eine Sensoreinrichtung anhand eingespeicherter Parameter verändernde Regeleinrichtung vorgesehen ist.

3. Warenverkaufs- oder Nutzungserlaubnisverkaufsautomat nach Anspruch 2, **dadurch gekennzeichnet, dass** wenigstens eine Sensoreinrichtung als ein Temperaturfühler ausgebildet ist.

4. Warenverkaufs- oder Nutzungserlaubnisverkaufsautomat nach Anspruch 2 oder 3, **dadurch gekennzeichnet, dass** wenigstens eine Sensoreinrichtung als ein Feuchtigkeitssensor ausgebildet ist.

5. Warenverkaufs- oder Nutzungserlaubnisverkaufsautomat nach einem der Ansprüche 2 bis 4, **dadurch gekennzeichnet, dass** wenigstens eine Sensoreinrichtung als Zeitsensor ausgebildet ist.

6. Warenverkaufs- oder Nutzungserlaubnisverkaufsautomat nach einem der Ansprüche 1 bis 5, **dadurch gekennzeichnet, dass** der Warenverkaufs- oder Nutzungserlaubnisverkaufsautomat eine mit der Regeleinrichtung verbundene sowie auf ein Kommunikationsnetz zugreifende und hierüber Daten des Warenverkaufs- oder Nutzungserlaubnisverkaufsautomaten an eine Auswertungszentrale übermittelnde Datensendeeinrichtung aufweist.

7. Warenverkaufs- oder Nutzungserlaubnisverkaufsautomat nach Anspruch 6, **dadurch gekennzeichnet, dass** der Warenverkaufs- oder Nutzungserlaubnisverkaufsautomat eine mit der Regeleinrichtung verbundene und auf ein Kommunikationsnetz zugreifende und hierüber Daten von einer Auswertungszentrale erhaltende Datenempfangseinrichtung aufweist.

8. Warenverkaufs- oder Nutzungserlaubnisverkaufsautomat nach Anspruch 6 oder 7, **dadurch gekennzeichnet, dass** das Kommunikationsnetz kabelgebunden, wie z. B. das Internet ausgebildet ist.

9. Warenverkaufs- oder Nutzungserlaubnisverkaufsautomat nach Anspruch 6 oder 7, **dadurch gekennzeichnet, dass** das Kommunikationsnetz drahtlos, wie z. B. das Mobilfunknetz ausgebildet ist.

10. System, bestehend aus einer Auswertungszentrale und mit dieser über ein Kommunikationsnetz verbundenen Warenverkaufs- oder Nutzungserlaubnisverkaufsautomaten nach Anspruch 7 oder 8 oder 9, soweit auf Anspruch 7 rückbezogen, wobei die Regeleinrichtung bidirektional kommunizierend ausgebildet und in der Auswertungszentrale vorgesehen ist.

11. System nach Anspruch 10, **dadurch gekennzeichnet, dass** die Regeleinrichtung mit einer Datenbank betreffend die geografischen Positionen der einzelnen Warenverkaufs- oder Nutzungserlaubnisverkaufsautomaten zur gestaffelten Berücksichtigung des Abstands der jeweils zu beeinflussenden Warenverkaufs- oder Nutzungserlaubnisverkaufsautomaten von dem die Daten für die Beeinflussung liefernden Warenverkaufs- oder Nutzungserlaubnisverkaufsautomat verbunden ist.

12. System nach Anspruch 10 oder 11, **dadurch gekennzeichnet, dass** zumindest ein Warenverkaufs- oder Nutzungserlaubnisverkaufsautomat eine von der Auswertungszentrale über das Kommunikationsnetz und die Datenempfangseinrichtung mit Zusatzdaten betreffend die anderen Warenverkaufs- oder Nutzungserlaubnisverkaufsautomaten versorgte Zusatzinformationsanzeige beinhaltet.
